# EUROPEAN PATENT APPLICATION

(11) **EP 1 826 012 A2**
(43) Date of publication of application: **29.08.2007**
(21) Application number: 07003928.4
(22) Date of filing: 26.02.2007
(51) Int. Cl.: B41J 2/21, C09D 11/00, B44C 5/04

(54) **Substrate having a surface printed by digital printing, and digital printing method**

(30) Priority: 24.02.2006 WO PCT/IT2006/000102
(71) Applicant: Microtek S.r.l., 20020 Arese MI (IT)
(72) Inventor: Scarpato, Massimo, 21047 Saronno VA (IT)
(74) Representative: Simino, Massimo

(57) **Abstract**

A substrate comprises a surface (S) printed by digital printing, with deposition on the said surface of a plurality of drops of homogeneous colour derived from a plurality of dedicated colours to reproduce a pattern comprising variations of tone in a restricted colour range by comparison with the colour range constituted by cyan, yellow and magenta. Advantageously, the tone of each dedicated colour lies within the aforesaid restricted colour range of the pattern, so as to ensure that the pattern does not include drops of colour having a tone and a chromatic return lying substantially outside the colour range of the pattern. For instance dedicated colour 1=20 yellow + 5 magenta +7 cyan,
dedicated colour 2 = 70 yellow + 50 magenta + 30 black.
A digital printing method is also provided.

## Description

The present invention relates to a substrate having a surface printed by digital printing according to the precharacterizing clause of Claim 1.

In another aspect, the present invention relates to a digital printing method.

Digital printing is widely used at the present time, owing to the advent of the computer and the comparatively low cost of printers.

Digital printing is generally carried out by the four-colour process, in other words by using four primary base colours (yellow, magenta, cyan and black), or by adding orange and green, or blue and red, for six-colour printing.

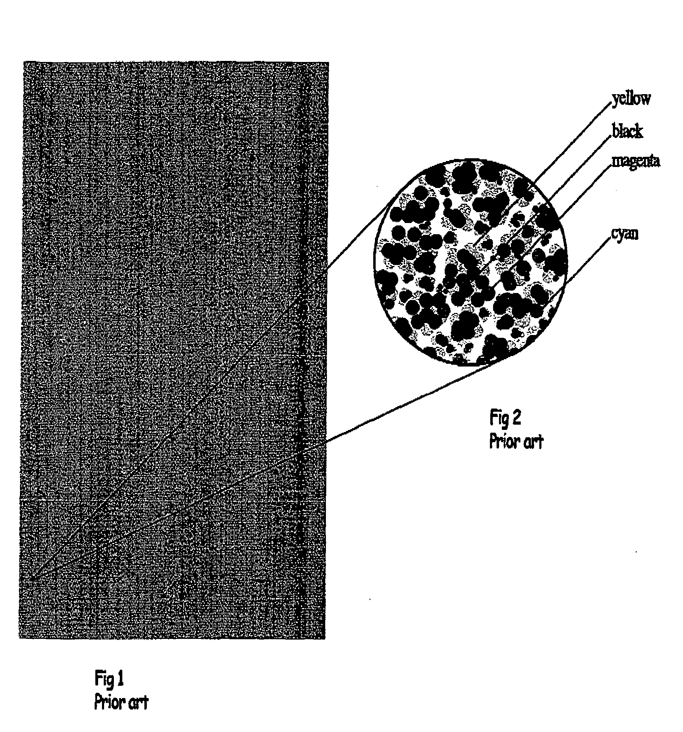

In the known digital printing method, a pattern and/or ornament is printed on the surface of a substrate by depositing a plurality of drops of the aforesaid base colours on the said surface. In particular, the drops of colour are microdrops, which form a corresponding plurality of colour dots on the printed surface, these dots not being clearly distinguishable by the human eye except by close examination or with the aid of a magnifying lens. Figure 1 shows a surface printed by conventional four-colour printing using the aforesaid primary colours, for reproducing the pattern of wood of the maple type. Figure 2 shows an enlarged detail of Figure 1, in which a colour dot of each of the aforesaid four primary base colours, namely yellow, magenta, cyan and black, is identified.

The aforesaid colour dots are suitably grouped adjacently to each other or in superimposition, which may be only partial, so as to reproduce the variations of tone of the printed pattern and/or ornament. It should be pointed out that the aforesaid grouping of colour dots exploits the characteristic of the human eye which tends to mix colours in the presence of small and highly complex colour structures, making it possible to simulate a colour having a given tone with a good approximation, together with the variations of the tone of the pattern and/or ornament, by the effect known as "dithering".

However, there are situations in which the presence of groups of colour dots of the different primary base colours, whether four or six, is perceptible, at least to an expert viewer.

This causes an intolerable disturbance which leads to the rejection of digital printing in favour of conventional printing using printing cylinders. For example, this is the case with laminates, where the ornament reproducing the pattern of a particular type of wood or a marbled surface is printed on a sheet of melamine paper, which is intended to be applied by a conventional hot pressing method to the surface of the laminate so as to become an integral part of it.

As stated above, the aforesaid detectable disturbance due to the presence of the grouped microdots of three different base colours is unacceptable in the laminate industry, to the point that printing on melamine paper is still carried out in the conventional way, in other words by using printing cylinders. It should be pointed out, however, that conventional printing is restricted to a very high repetition of the printed design, due to the size of the printing cylinder.

In relation to laminates, it should be noted that these have virtually standard dimensions, with a length of approximately three metres. Clearly, therefore, the use of conventional printing with printing cylinders is only possible if a high level of repetition of a design module is accepted.

It is clear from the above that, in the printing industry, there is a considerable demand for a method of producing a substrate having a surface printed with a pattern and/or ornament having a restricted colour range which is free of the aforesaid imperfections and which allows the pattern of the printed design and/or ornament to be varied as desired, that is to say without being subject to the problems of repetition of a given base module.

The problem tackled by the present invention is that of devising a substrate having a surface printed by digital printing which has structural and functional characteristics such that the aforesaid requirement is met while the drawbacks mentioned with reference to the known art are overcome.

This problem is solved by a substrate having a surface printed by digital printing according to Claim 1.

In another aspect, the invention relates to a digital printing method according to Claim 8.

Further characteristics and advantages of the substrate having a surface printed by digital printing according to the present invention will be made clear by the following description of some preferred examples of embodiment of the invention, provided for guidance and without restrictive intent, with reference to the attached figures, in which:
- Figure 1 shows a plan view of a substrate having its surface printed by digital printing according to the known art and reproducing the pattern of a wood of the maple type;
- Figure 2 shows an enlargement of a detail of the printed surface of Figure 1;
- Figure 3 shows a plan view of a substrate having its surface printed by digital printing according to the present invention and reproducing the pattern of a wood of the maple type;
- Figure 4 shows an enlargement of a detail of the printed surface of Figure 3, and
- Figure 5 shows a further enlargement of Figure 4.

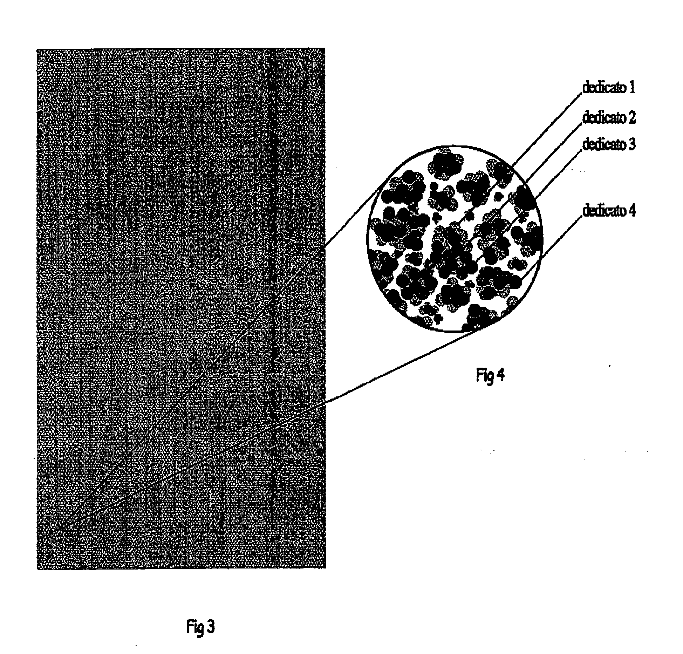

With reference to the attached Figures 3 to 5, the letter S indicates the whole of the surface of a substrate according to the present invention, which has been printed by digital printing according to the method of the present invention.

The substrate on the surface S of which the digital printing is carried out according to the invention can be of any type, for example a sheet, a foil or other element, including non-laminar elements, with a substantially smooth printing surface. The surface on which the digital printing is to be carried out can be paper, cardboard, card, plastics material, sheet metal, fabrics, or any other material to which the digital printing inks can adhere.

In the case of sheet metal, as for other substrates, digital printing can be carried out either directly, for example by using solvent-based dyes, or by the known sublimation method. In this case, digital printing can be carried out on sublimation transfer paper, and then transferred to the substrate by the aforesaid sublimation method. In this case, it is clearly also possible to transfer the digital printing to the curve surface of a substrate.

Advantageously, digital printing enables the colours, veining and effects of the widest range of materials to be reproduced, among which we may mention, purely by way of example and in a non-exclusive way, wood and marble.

In particular, the substrate having a surface printed by digital printing according to the present invention can be a sheet of melamine paper. When printed, the sheet of melamine paper is intended to be applied by a conventional hot pressing method to the surface of a laminate so that it becomes an integral part of it and forms the decorative surface of the laminate. Thus it is possible to produce laminates having their surfaces decorated in such a way as to reproduce the patterns of different varieties of wood (for example walnut, maple, zebra wood, etc.), of marble and its veining, or other designs, patterns and/or ornaments.

According to the digital printing method, the pattern and/or ornament to be reproduced is printed on the surface S of the substrate by depositing on the surface S a plurality of drops of homogeneous colour taken from a plurality of primary colours. In particular, the drops of colour are microdrops, which form a corresponding plurality of colour dots which are generally not clearly distinguishable by the human eye except with the aid of a magnifying lens.

The aforesaid colour dots are suitably grouped adjacently to each other or in superimposition, which may be only partial, so as to reproduce the variations of tone of the pattern and/or ornament to be printed on the surface S of the substrate. By exploiting the characteristic of the human eye which tends to mix the colours in the presence of small and complex colour structures, the aforesaid grouping of colour dots makes it possible to simulate a colour having a specified tone, as well as the variations of tone of the pattern and/or ornament.

The pattern and/or ornament of the surface S of the product according to the invention is not monochromatic, includes variations of tone and has a restricted colour range by comparison with the colour range obtainable by mixing different percentages of cyan, yellow, magenta and/or black, that is to say the primary base colours used in four-colour printing.

In the present description the terms "not monochromatic" is used to intend a variation of colours different from variation such as black and white and greyscale.

It has to be noted that according to the well known four, primary colour printing system by mixing different percentage of cyan, yellow, magenta and/or black, it is possible to reproduce the width of the full chromatic gamut showed by the Pantone colour matching system.

For determining the colour range it can be useful to refer to the Pantone colour matching system, so as the "restricted colour range by comparison with the colour range obtainable by mixing different percentages of cyan, yellow, magenta and/or black" can be considered as a chromatic gamut less than 50%, preferably less than 35% and more preferably less than 25% of the full chromatic gamut showed by the Pantone colour matching system.

The above shall apply mutatis mutandis to a six, primary colour printing system instead of a four, primary colour printing system.

In view of this features, and according to the invention, the aforesaid primary colours, used to form the microdrops of colour deposited in groups on the surface S to be printed, consist of homogeneous dedicated colours, each having a colour tone and a chromatic return within the aforesaid restricted colour range of the pattern and/or ornament to be printed. As a consequence, in a four colour printing system the four dedicated colours to be used can not comprise cyan, yellow, magenta and black at the same time.

This advantageously makes it possible to ensure that the pattern and/or ornament printed on the surface S of the substrate does not include colour dots which, although of a size such that they are difficult to detect with the human eye, have a tone and a chromatic return lying outside the restricted colour range of the pattern and/or ornament to be printed.

The aforesaid dedicated colours form a homogeneous mixture of colours whose colour tone lies substantially within the restricted colour range of the pattern and/or ornament printed on the surface S of the substrate.

The pattern and/or ornament can advantageously be printed on the basis of four dedicated colours, or alternatively six dedicated colours, provided in separate cartridges, the tone of each dedicated colour being substantially lying within the restricted colour range of the pattern and/or ornament to be printed. Each of said dedicated colours is directly deposited as drops on the surface S from a respective cartridge and through a respective nozzle without being premixed with the other dedicated colours. In other word the pattern and/or ornament is printed by depositing homogeneous colour dots corresponding, respectively, to four or six different dedicated colours through four or six respective nozzle without being premixed with the other dedicated colours. This makes it possible to carry out the digital printing of the pattern and/or ornament on the surface S of the substrate by using the present four-colour or, respectively, six-colour, digital printing equipment well known and available on the market, without the need to make any change on its hardware and/or software.

Clearly, in order to print the surface S of the substrate according to the invention, it will be just necessary to replace the cartridges containing the primary base colours normally used for four-colour printing, generally yellow, cyan, magenta and black, with the possible addition of orange and green, or blue and red, for six-colour printing, with cartridges filled with the four or six respectively homogeneous dedicated colours, suitably prepared in order to lie within the restricted colour range of the pattern and/or ornament to be printed.

It should be pointed out that the shades of tone of the pattern and/or ornament are obtained by adjusting the quantity of dedicated colour supplied in each drop. In general, the quantity of colour, also called the colour density, can vary from 0% to 100%, the first value corresponding to a non-supply of colour, while the second value corresponds to the complete covering of the surface with a continuous layer of the colour in question, so that the surface at this point takes on the tone of the dedicated colour supplied to it.

According to the invention, the digital printing method for printing on the surface S of a substrate a pattern and/or ornament which is not monochromatic, includes variations of tone and has a restricted colour range by comparison with the colour range constituted by cyan, yellow and magenta comprises the following steps:
a) providing a plurality of dedicated, homogeneous colours in separate cartridges, the tone of each dedicated colour being substantially lying within the restricted colour range of the pattern and/or ornament to be printed, in order to avoid to have the above separate cartridges respectively filled with cyan, yellow, magenta and black in a respective, and
b) reproducing the said printed pattern and/or ornament by depositing on the said surface drops of said dedicated colours in order to avoid the presence in the said printed pattern and/or ornament of drops of colour having a tone and a chromatic return lying substantially outside the colour range of the pattern and/or ornament, wherein each of said dedicated colours is directly deposited as drops on the said surface through a respective nozzle without being premixed with the other dedicated colours.

The aforesaid step a) is preceded by the step of determining the colour range of the said pattern and/or ornament, with the aim of identifying the range of tone from which the dedicated colours must not depart in order not to cause defects which would be detected by a close examination of the printed surface S of the substrate according to the invention.

As described above, the drops of each dedicated colour are directly deposited on the surface S to be printed from a respective cartridge and through a respective nozzle without being premixed with the drops of the other dedicated colours in such a way that they are suitably grouped adjacently to each other and/or in superimposition, which may be partial, so as to reproduce the variations of tone of the pattern and/or ornament to be printed.

Some examples of combinations of dedicated colours for four-colour printing designed to form the patterns of different types of wood are shown below, purely by way of example.

### EXAMPLE 1

To reproduce the pattern of wood of the maple type on the surface S of the substrate according to the invention, it is possible to start with the aforesaid four dedicated colours:
**dedicated colour 1 =** 20 yellow + 5 magenta + 7 cyan;
**dedicated colour 2 =** 70 yellow + 50 magenta + 30 black;
**dedicated colour 3 =** 25 yellow + 10 magenta + 11 cyan;
**dedicated colour 4** = 66 yellow + 34 magenta + 9 black.

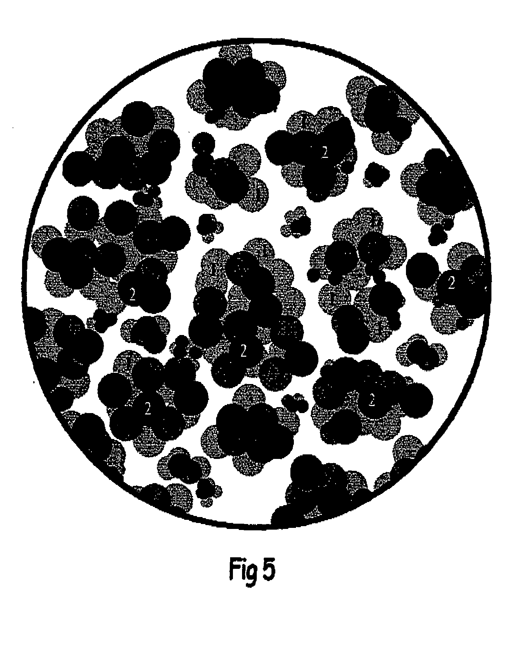

Digital printing according to the invention corresponding to this example is illustrated in Figure 3, where Figure 4 shows an enlarged detail in which a corresponding colour dot has been identified for each of the aforesaid four dedicated colours. Figure 5 shows the detail of Figure 4 at a higher level of enlargement, in which the reference numerals 1 to 4 are used to identify some colour dots of the different dedicated colours.

### EXAMPLE 2

To reproduce the pattern of wood of the cherry type on the surface S of the substrate according to the invention, it is possible to start with the aforesaid four dedicated colours:
**dedicated colour 1** = 15 yellow + 13 magenta;
**dedicated colour 2** = 43 yellow + 38 magenta + 11 black;
**dedicated colour 3** = 7 yellow + 5 magenta + 6 cyan;
**dedicated colour 4** = 36 yellow + 27 magenta.

### EXAMPLE 3

To reproduce the pattern of wood of the zebra type on the surface S of the substrate according to the invention, it is possible to start with the aforesaid four dedicated colours:
**dedicated colour 1** = 25 yellow + 35 magenta + 3 cyan;
**dedicated colour 2** = 80 yellow + 57 magenta + 45 black;
**dedicated colour 3** = 15 yellow + 5 magenta + 13 cyan;
**dedicated colour 4 =** 57 yellow + 44 magenta + 17 black.

In the above examples, the composition of each dedicated colour is expressed as a number of units (millilitres, for example) of colours known as primary, in other words yellow, magenta, cyan and/or black, which the colour contains. Clearly, the percentage of the primary colours making up any specific dedicated colour can be deduced from the number of parts of primary colour making up each dedicated colour.

It should be pointed out that, in practical terms, the use of a dedicated colour obtained by mixing at least two primary colours provides a quality of digital printing which is greatly superior to the result which can be achieved by direct deposition of the three primary colours on the surface to be printed. This is because, as explained above, in digital printing according to the known art, the colour tone of each micro-area of the pattern and/or ornament is created by depositing on the surface to be printed a group of colour drops which in combination, in other words in terms of their average values in the micro-area, provide the quantity of the different primary colours required to simulate the desired colour tone, by the effect known as "dithering". However, since the aforesaid group of primary colours can still be detected by close examination of the printed surface, it is evident that a careful observer will identify in the printed surface the undesired presence of colour dots which are markedly different from the colour range of the specific analysed point of the pattern and/or ornament. Conversely, the use of a dedicated homogeneous colour having a tone within or at least close to the restricted colour range of the pattern and/or ornament to be obtained ensures that no colour dots having a colour tone remote from the colour range of the pattern and/or ornament can be observed, even by examination with a magnifying lens. Essentially, the use of the aforesaid dedicated colours makes it possible to have groups of colour dots formed by dots of colours having tones within or at least similar or close to the restricted colour range of the printed pattern and/or ornament.

Moreover, by depositing on the surface to be printed microdrops of homogeneous dedicated colours having tones within or at least close to the restricted colour range of the pattern and/or ornament to be printed, it is possible to obtain shades and variations of colour tone within the aforesaid restricted colour range which could not be obtained otherwise by the conventional four-colour or six-colour printing technology based on the primary base colours.

As will be clear from the above description, the substrate having a surface printed by digital printing according to the present invention enables the aforesaid requirement to be met while simultaneously overcoming the drawbacks mentioned in the introductory part of the present description. In particular, even a close examination or enlargement of the printed surface does not reveal the undesired presence of colour dots having a tone not included in or close to the restricted colour range of the printed pattern and/or ornament.

An advantage of the substrate having a surface printed by digital printing according to the present invention resides in the structural simplicity of the structural solution used to avoid the defects of digital printing according to the known art, as a result of which it is possible to use the same equipment and printers used for digital printing up to the present time.

Clearly, a person skilled in the art can make numerous modifications and variations to the substrate comprising a surface printed by digital printing described above, in order to meet contingent and specific requirements, all such modifications and variations being contained within the scope of protection of the invention as defined in the following claims.

## Claims

1. Digital printing method for printing the surface of a support by deposition of a plurality of homogeneous colour drops in order to reproduce a pattern and/or ornament which is not monochromatic, includes variations of tone and has a restricted colour range by comparison with the colour range obtainable by mixing different percentages of cyan, yellow, magenta and/or black, the method comprising the steps of:
- providing a plurality of dedicated, homogeneous colours in separate cartridges, the tone of each dedicated colour being substantially lying within the restricted colour range of the pattern and/or ornament to be printed and
- reproducing the said printed pattern and/or ornament by depositing on the said surface drops of said dedicated colours in order to avoid the presence in the said printed pattern and/or ornament of drops of colour having a tone and a chromatic return lying substantially outside the colour range of the pattern and/or ornament, wherein each of said dedicated colours is directly deposited as drops on the said surface through a respective nozzle without being premixed with the other dedicated colours.

2. Digital printing method according to Claim 1, wherein the step of providing a plurality of dedicated, homogeneous colours in separate cartridges, the tone of each dedicated colour being substantially lying within the restricted colour range of the pattern and/or ornament to be printed is preceded by a step of determining the colour range of the said pattern and/or ornament.

3. Digital printing method according to Claim 1 or 2, wherein the said drops of dedicated colour are deposited on the said surface in such a way as to be suitably grouped together.

4. Digital printing method according to Claim 3, in which the said drops of dedicated colour are grouped adjacently to each other and/or in superimposition, which may be partial, to reproduce the variations of tone of the said pattern and/or ornament.

5. Digital printing method according to any one of Claims 1 to 4, in which each dedicated colour consists of a homogeneous mixture of colours whose colour tone substantially lies within the said restricted colour range of the said pattern and/or ornament.

6. Digital printing method according to any one of Claims 1 to 5, in which the said pattern and/or colour is obtained by the deposition on the said surface of drops of homogeneous colour obtained from four dedicated colours.

7. Digital printing method according to any one of Claims 1 to 5, in which the said pattern and/or colour is obtained by the deposition on the said surface of drops of homogeneous colour obtained from six dedicated colours.

8. Digital printing method according to any one of Claims 1 to 7, in which shades of tone of the said pattern and/or ornament are obtained by adjusting the quantity of dedicated colour in each drop.

9. Substrate comprising a surface printed by digital printing with the deposition on the said surface of a plurality of drops of homogeneous colour obtained from a plurality of primary colours, the said printed surface reproducing a pattern and/or ornament in which:
- the said drops of colour are suitably grouped adjacently to each other and/or in superimposition, which may be partial, to reproduce the variations of tone of the said pattern and/or ornament;
- the said pattern and/or ornament is not monochromatic and comprises variations of tone, and
- the said variations of tone constitute a restricted colour range by comparison with the colour range constituted by cyan, yellow and magenta,
**characterized in that** the said colours of the said plurality of primary colours are homogeneous dedicated colours, the tone of each dedicated colour substantially lying within the restricted colour range of the said pattern and/or ornament to be printed, so as to avoid the presence in the said pattern and/or ornament of drops of colour having a tone and a chromatic return lying substantially outside the restricted colour range of the said pattern and/or ornament,
wherein each of said dedicated colours is directly deposited from a separate cartridges as drops on the said surface through a respective nozzle without being premixed with the other dedicated colours.

10. Substrate according to Claim 9, in which each dedicated colour consists of a homogeneous mixture of colours whose colour tone substantially lies within the said restricted colour range of the said pattern and/or ornament.

11. Substrate according to Claim 9 or 10, in which the said pattern and/or colour is obtained by the deposition on the said surface of drops of colour obtained from four dedicated colours.

12. Substrate according to Claim 9 or 10, in which the said pattern and/or colour is obtained by the deposition on the said surface of drops of colour obtained from six dedicated colours.

13. Substrate according to any one of Claims 9 to 12, in which shades of tone of the said pattern and/or ornament are obtained by adjusting the quantity of dedicated colour in each drop.

14. Substrate according to any one of Claims 8 to 13, in which the said substrate is melamine paper.

15. Laminate comprising a surface covered by the application of melamine paper by hot pressing, in which the said melamine paper is a substrate according to any one of Claims 9 to 14.
